# EUROPEAN PATENT APPLICATION

(11) **EP 2 423 734 A1**
(43) Date of publication of application: **29.02.2012**
(21) Application number: 11179173.7
(22) Date of filing: 29.08.2011
(51) Int. Cl.: G02F 1/13

(54) **Liquid crystal module**

(30) Priority: 31.08.2010 JP 2010193424
(71) Applicant: Funai Electric Co., Ltd., Nakagaito Daito-shi Osaka 574-0013 (JP)
(72) Inventor: Harada, Suehiro, Daito-shi, Osaka 574-0013 (JP); Hayashi, Yuichi, Daito-shi, Osaka 574-0013 (JP)
(74) Representative: Grünecker, Kinkeldey, Stockmair & Schwanhäusser

(57) **Abstract**

A liquid crystal module includes a liquid crystal panel, first and second support members, and a plurality of positioning ribs. The first support member supports a first side portion of the liquid crystal panel. The first support member has a first inner cavity and a first outer cavity. The second support member supports a second side portion of the liquid crystal panel. The second support member has a second inner cavity and a second outer cavity. The first and second inner cavities form an inner cavity group. The first and second outer cavities form an outer cavity group. The positioning ribs are detachably and selectively attached to one of the inner cavity group and the outer cavity group such that the positioning ribs positions the liquid crystal panel in first and second directions of the liquid crystal panel, respectively.

## Description

### CROSS-REFERENCE TO RELATED APPLICATIONS

This application claims priority to Japanese Patent Application No. 2010-193424 filed on August 31, 2010. The entire disclosure of Japanese Patent Application No. 2010-193424 is hereby incorporated herein by reference.

### BACKGROUND

### Field of the Invention

The present invention generally relates to a liquid crystal module. More specifically, the present invention relates to a liquid crystal module having a plurality of positioning ribs for positioning a liquid crystal panel.

### Background Information

A conventional liquid crystal module includes a liquid crystal panel, a pair of lengthwise support members, a pair of widthwise support members, and a plurality of positioning ribs. The positioning ribs are formed integrally on support surfaces of the lengthwise support members and the widthwise support members. The lengthwise support members support mutually opposing lengthwise side portions of the liquid crystal panel. The widthwise support members support mutually opposing widthwise side portions of the liquid crystal panel. The liquid crystal panel is positioned in a widthwise direction of the liquid crystal panel by the positioning ribs of the lengthwise support members. The liquid crystal panel is also positioned in a lengthwise direction of the liquid crystal panel by the positioning ribs of the widthwise support members.

Another conventional display panel mounting device includes a base body, and first and second positioning members. The first positioning member is disposed on the base body. The first positioning member includes a first rod-shaped part movable in a first direction along a first guide rail. The second positioning member is also disposed on the base body. The second positioning member includes a second rod-shaped part movable in a second direction that is different from the first direction along a second guide rail. A display panel is mounted in a desired position on a frame by the first positioning member and the second positioning member (see Japanese Laid-open Patent Application Publication No. 2006-243469, for example).

Yet another conventional liquid crystal display device includes a lower frame, a liquid crystal panel, and an optical sheet. The lower frame has a recessed portion that is formed in a portion of a periphery of the lower frame. The recessed portion is provided with a column member that is inserted through a through-hole in a projecting portion of the optical sheet to position the optical sheet and the liquid crystal panel. Liquid crystal panels having different external dimensions can be positioned by mounting cylindrical sleeves having different outside diameters to the column member (see Japanese Laid-open Patent Application Publication No. 2002-196312, for example).

Furthermore, another liquid crystal display device includes a backlight frame and a liquid crystal panel. The liquid crystal panel has chamfered end surfaces that are formed in the corners of the liquid crystal panel. The backlight frame has projections. The liquid crystal panel is positioned by engaging the projections with the chamfered end surfaces (see Japanese Laid-open Patent Application Publication No. 2000-19511, for example).

### SUMMARY

It has been discovered that when a liquid crystal panel is positioned by positioning ribs that are integrally formed in both lengthwise support members and widthwise support members, if the external dimensions (i.e., the lengthwise and widthwise dimensions) of the liquid crystal panel change, then new lengthwise support members and widthwise support members have to be designed to create a new mold since the lengthwise support members and widthwise support members in which the positioning ribs are integrally formed are used in accordance with the external dimensions of the liquid crystal panel. This causes a problem in increasing costs.

Furthermore, with a conventional display panel mounting device, such as a display panel mounting device illustrated in Japanese Laid-open Patent Application Publication No. 2006-243469, the position where the display panel is mounted can be changed. However, display panels having different external dimensions cannot be mounted. Furthermore, with a conventional liquid crystal display device, such as a liquid crystal display device illustrated in Japanese Laid-open Patent Application Publication No. 2000-19511, liquid crystal panels having different external dimensions cannot be positioned.

On the other hand, with a liquid crystal display device, such as a liquid crystal display device illustrated in Japanese Laid-open Patent Application Publication No. 2002-196312, liquid crystal panels having different external dimensions can be positioned by mounting cylindrical sleeves having different outside diameters to the column member. However, since at least two types of cylindrical sleeves having different outside diameters are required. Thus, the number of components increases, which increases costs.

The present invention was conceived in light of the above-mentioned problems. One object of the present invention is to provide a liquid crystal module with which at least two types of liquid crystal panels having different external dimensions can be positioned with common support members and positioning ribs.

In accordance with one aspect of the present disclosure, a liquid crystal module includes a liquid crystal panel, a first support member, a second support member, and a plurality of positioning ribs. The liquid crystal panel has first and second side portions. The first side portion has an edge that extends in a first direction of the liquid crystal module. The second side portion has an edge that extends in a second direction of the liquid crystal module that is perpendicular to the first direction of the liquid crystal module. The first support member supports the first side portion of the liquid crystal panel. The first support member has a first inner cavity and a first outer cavity. The first outer cavity is outwardly spaced apart from the first inner cavity in the second direction of the liquid crystal module relative to the first inner cavity. The second support member supports the second side portion of the liquid crystal panel. The second support member has a second inner cavity and a second outer cavity. The second outer cavity is outwardly spaced apart from the second inner cavity in the first direction of the liquid crystal module relative to the second inner cavity. The first inner cavity of the first support member and the second inner cavity of the second support member form an inner cavity group of the first and second support members. The first outer cavity of the first support member and the second outer cavity of the second support member form an outer cavity group of the first and second support members. The positioning ribs are detachably and selectively attached to one of the inner cavity group and the outer cavity group such that the positioning ribs positions the liquid crystal panel in the first and second directions of the liquid crystal panel, respectively.

These and other objects, features, aspects and advantages will become apparent to those skilled in the art from the following detailed description, which, taken in conjunction with the annexed drawings, discloses a preferred embodiment.

### BRIEF DESCRIPTION OF THE DRAWINGS

Referring now to the attached drawings which form a part of this original disclosure:

FIG. 1 is an exploded perspective view of a liquid crystal module in accordance with one embodiment;

FIG. 2 is a front elevational view of the liquid crystal module illustrated in FIG. 1;

FIG. 3 is an enlarged partial cross-sectional view of the liquid crystal module taken along III-III line in FIG. 2;

FIG. 4 is an enlarged partial cross-sectional view of the liquid crystal module taken along IV-IV line in FIG. 2;

FIG. 5 is an enlarged, partial perspective view of a positioning rib and a lamp frame of the liquid crystal module illustrated in FIG. 1;

FIG. 6A is an enlarged partial cross-sectional view of the liquid crystal module taken along VIA-VIA line in FIG. 5 illustrating that the positioning rib is assembled in an inner cavity of the lamp frame to position a liquid crystal panel having small external dimensions; and

FIG. 6B is an enlarged partial cross-sectional view of the liquid crystal module taken along VIB-VIB line in FIG. 6 illustrating that the positioning rib is assembled in an outer cavity of the lamp frame to position a liquid crystal panel having large external dimensions.

### DETAILED DESCRIPTION OF EMBODIMENTS

A preferred embodiment will now be explained with reference to the drawings. It will be apparent to those skilled in the art from these disclosures that the following descriptions of the preferred embodiment are provided for illustration only and not for the purpose of limiting the invention as defined by the appended claims and their equivalents.

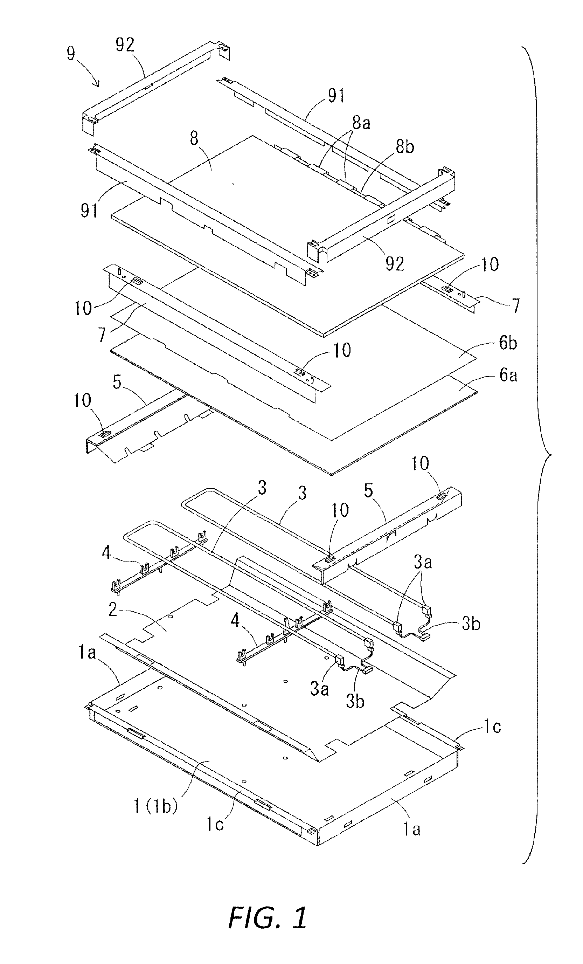

Referring to FIGS. 1-4, a liquid crystal module will be described in detail. As illustrated in FIG. 1, the liquid crystal module mainly includes a rear frame 1, a light-reflecting sheet 2, a plurality of (two in FIG. 1) U-shaped cold-cathode tubes 3, a pair of lamp holders 4, a pair of lamp frames 5, a plurality of optical sheets 6a and 6b, a pair of cell guides 7, a liquid crystal panel 8, a bezel 9 with bezel structural members 91 and 92 connected in a rectangular frame formation, and a plurality of positioning ribs 10. The liquid crystal module is used for a television, a display monitor of a PC, or another electronic device.

The rear frame 1 is a shallow box-shaped frame that is made of sheet metal. The rear frame 1 has a bottom plate 1b, a pair of widthwise side plates 1a, and a pair of lengthwise side plates 1c. The widthwise side plates 1a and the lengthwise side plates 1c define an interior area of the rear frame 1 therebetween, respectively. The lengthwise side plates 1c extend in a lengthwise direction of the rear frame 1 that is parallel to a lengthwise direction (or horizontal direction) of the liquid crystal module. The widthwise side plates 1a extend in a widthwise direction of the rear frame 1 that is parallel to a widthwise direction (or vertical direction) of the liquid crystal module. The light-reflecting sheet 2 is disposed within the interior area of the rear frame 1. The light-reflecting sheet 2 is folded into an inverted trapezoid shape. The U-shaped cold-cathode tubes 3 are arranged in parallel to each other above the light-reflecting sheet 2 within the interior area of the rear frame 1. Each of the U-shaped cold-cathode tubes 3 has a U-shaped curved end, and a pair of straight parts. The lamp holders 4 hold the U-shaped curved ends and center portions of the straight parts of the U-shaped cold-cathode tubes 3, thereby fixing the U-shaped cold-cathode tubes 3 in place relative to the bottom plate 1b of the rear frame 1.

A pair of rubber lamp sockets 3a is attached to end portions of each of the U-shaped cold-cathode tubes 3 that are opposite the U-shaped curved end of each of the U-shaped cold-cathode tubes 3. The lamp sockets 3a are fitted into socket-fitting holes (not shown) formed in the bottom plate 1b of the rear frame 1 along the widthwise side plate 1a on either the left or right side of the rear frame 1 (right side in FIG. 1). Furthermore, lead wires 3b electrically connected to the U-shaped cold-cathode tubes 3 are extended out behind the rear frame 1. The lamp frames 5 are made of a synthetic resin. The lamp frames 5 are attached to the widthwise side plates 1a, respectively, within the interior area of the rear frame 1. The widthwise side plates 1a extend along widthwise side edges (e.g., second side edges) of the bottom plate 1b of the rear frame 1. The widthwise side plates 1a extend forward of the rear frame 1 relative to the bottom plate 1b from the widthwise side edges. The lamp frames 5 covers both the end portions of the U-shaped cold-cathode tubes 3 where the lamp sockets 3a are attached, and the U-shaped curved ends from above such that there is no variation in brightness.

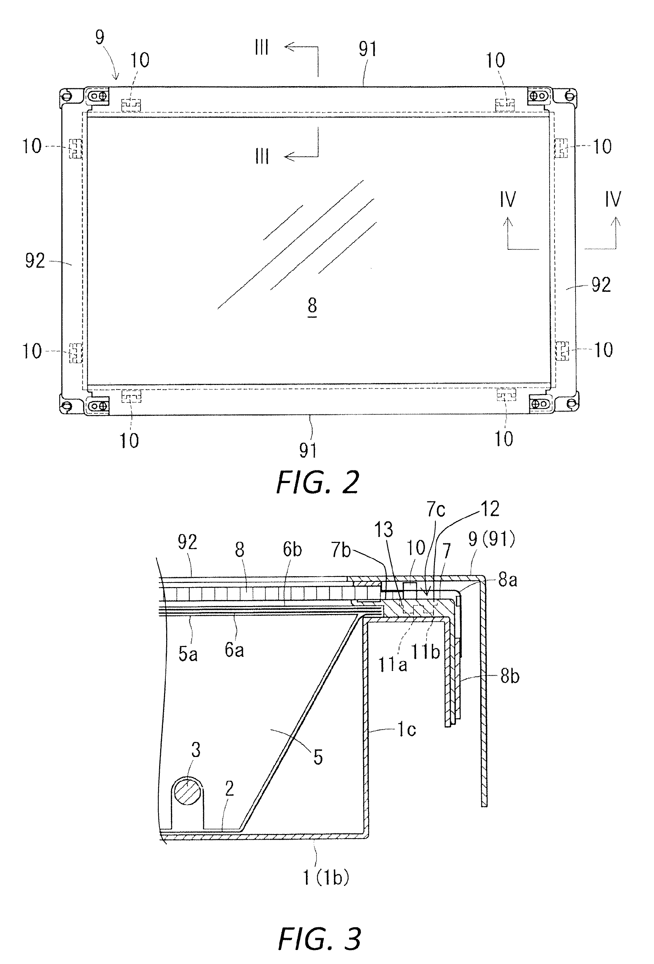

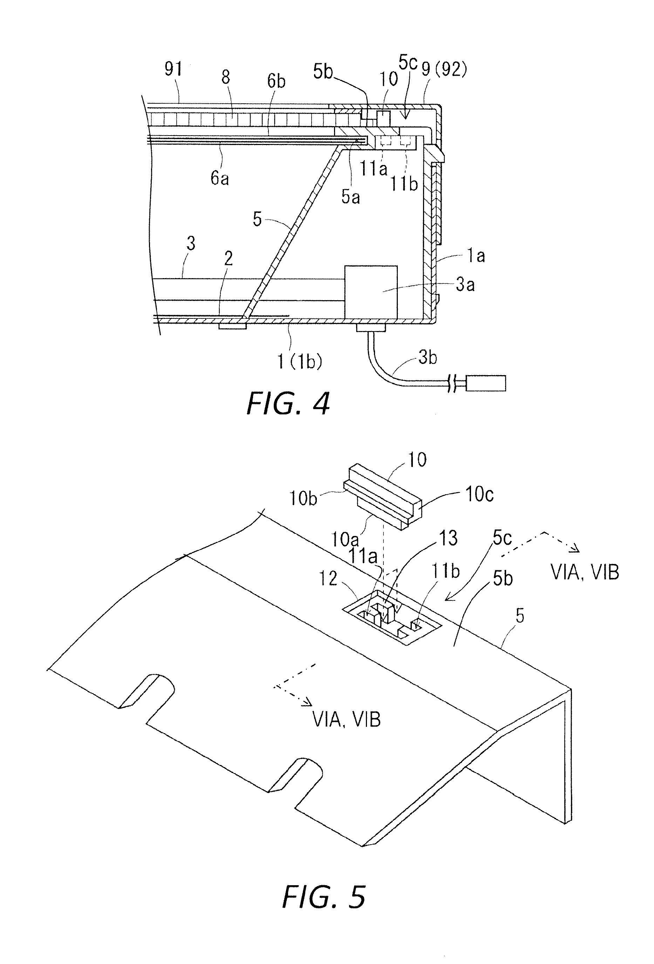

The lengthwise side plates 1c extend along lengthwise side edges (e.g., first side edges) of the rear frame 1. The lengthwise side plates 1c extend forward of the rear frame 1 relative to the bottom plate 1b from the lengthwise side edges. The lengthwise side plates 1 c are both folded into upside-down U shapes to form two-layered side plates. Lengthwise edge portions (e.g., first side edge portion) of the optical sheets 6a and 6b are laid over top surfaces of the two-layered lengthwise side plates 1c, and are pressed down by the synthetic resinous cell guides 7 as illustrated in FIGS. 1 and 3. In other words, the lengthwise edge portions of the optical sheets 6a and 6b are sandwiched between the top surfaces of the lengthwise side plates 1c and the cell guides 7, respectively. Widthwise edge portions (e.g., left and right edge portions or second side edge portions) of the optical sheets 6a and 6b are inserted into and disposed within holding grooves 5a of the lamp frames 5 as illustrated in FIG. 4. The holding grooves 5a extend in the widthwise direction of the liquid crystal module along the lamp frames 5. These optical sheets 6a and 6b are light-diffusing sheets which diffuse direct light from the U-shaped cold-cathode tubes 3 or reflected light reflected by the light-reflecting sheet 2 and illuminate the liquid crystal panel 8 evenly from behind. The upper optical sheet 6b is a thin light-diffusing sheet. The lower optical sheet 6a is a heavy, inflexible light-diffusing sheet (or light-diffusing plate).

The four sides of the liquid crystal panel 8 are placed on the lamp frames 5 and the cell guides 7, respectively. Specifically, a pair of widthwise side portions (e.g., second side portions) of the liquid crystal panel 8 is disposed on the lamp frames 5, respectively. The lamp frames 5 form a pair of widthwise support members (e.g., second support members) for supporting the mutually opposing widthwise side portions of the liquid crystal panel 8. A pair of lengthwise side portions (e.g., first side portions) of the liquid crystal panel 8 is disposed on the cell guides 7, respectively. The cell guides 7 form a pair of lengthwise support members (e.g., first support members) for supporting the mutually opposing lengthwise side portions of the liquid crystal panel 8. The liquid crystal panel 8 is positioned such that the liquid crystal panel 8 is prevented from moving in the lengthwise direction by the positioning ribs 10 attached at both longitudinal end portions of support surfaces 5b (e.g. top surface or second support surfaces) of the lamp frames 5. The liquid crystal panel 8 is also positioned such that the liquid crystal panel 8 is prevented from moving in the widthwise direction by positioning ribs 10 attached at both longitudinal end portions of support surfaces 7b (e.g., top surface or first support surfaces) of the cell guides 7. The four peripheral edges (i.e., widthwise and lengthwise side portions) of the liquid crystal panel 8 are enclosed by the bezel 9 in which the four bezel structural members 91, 92 are connected in a rectangular frame formation. The four corners of the bezel 9 are fastened by screws to the rear frame 1 to assemble the liquid crystal module.

As illustrated in FIGS. 1 and 3, the liquid crystal panel 8 also includes a chip on film 8a and an X-printed circuit board (X-PCB) 8b. The X-PCB 8b is connected to the lengthwise side portions of the liquid crystal panel 8 via the chip on film 8a. The X-PCB 8b is attached to a side surface of the cell guide 7.

Each of the lamp frames 5 has the support surface 5b and a pair of rib-assembling portions 5c that is formed at the both longitudinal end portions of the support surface 5b. Furthermore, each of the rib-assembling portions 5c includes a rectangular counterbore 12 (e.g., second step portion) with a bottom surface 13 (e.g., second bottom face), and inner and outer cavities 11a and 11b (e.g., second inner and outer cavities) formed in the bottom surface 13 within the counterbore 12. The outer cavity 11b of each of the rib-assembling portions 5c is outwardly spaced apart from the inner cavity 11a of each of the rib-assembling portions 5c such that the outer cavity 11b of each of the rib-assembling portions 5c is aligned to the inner cavity 11a of each of the rib-assembling portions 5c in the lengthwise direction of the liquid crystal module. Moreover, each of the cell guides 7 has the support surface 7b and a pair of rib-assembling portions 7c that is formed at the both longitudinal end portions of the support surface 7b. Furthermore, each of the rib-assembling portions 7c includes the same structure as the rib-assembling portions 5c. Specifically, each of the rib-assembling portions 7c has the rectangular counterbore 12 (e.g., first step portion) with the bottom surface 13 (e.g., first bottom face), and the inner and outer cavities 11a and 11b (e.g., first inner and outer cavities) formed in the bottom surface 13 within the counterbore 12. The outer cavity 11b of each of the rib-assembling portions 7c is outwardly spaced apart from the inner cavity 11a of each of the rib-assembling portions 7c such that the outer cavity 11b of each of the rib-assembling portions 7c is aligned to the inner cavity 11a of each of the rib-assembling portions 7c in the widthwise direction of the liquid crystal module. The inner cavities 11a of the rib-assembling portions 5c of the lamp frames 5 and the inner cavities 11a of the rib-assembling portions 7c of the cell guides 7 form an inner cavity group of the lamp frames 5 and the cell guides 7. The outer cavities 11b of the rib-assembling portions 5c of the lamp frames 5 and the outer cavities 11b of the rib-assembling portions 7c of the cell guides 7 form an outer cavity group of the lamp frames 5 and the cell guides 7.

The positioning ribs 10 are independently formed as separate members from the lamp frames 5 and the cell guides 7. The positioning ribs 10 are detachably and selectively attached to one of the inner cavity group and the outer cavity group of the lamp frames 5 and the cell guides 7. For example, as illustrated in FIG. 5, one of the positioning ribs 10 is selectively attached to one of the inner cavity 11a and the outer cavity 11b of the rib-assembling portion 5c of the lamp frame 5. The inner cavity group and the outer cavity group of the lamp frames 5 and the cell guides 7 are arranged at locations corresponding to external shapes of at least two types of the liquid crystal panels 8 having different external dimensions (e.g., lengthwise dimensions and widthwise dimensions). Specifically, the liquid crystal panels 8 have a first predetermined size and the second predetermined size that is larger than the first predetermined size. The positioning ribs 10 are assembled in the inner cavity group (i.e., the inner cavities 11a of the lamp frame 5 and the cell guides 7) or the outer cavity group (i.e., the outer cavities 11b of the lamp frame 5 and the cell guides 7) that corresponds to the external shape of the liquid crystal panel 8 to be positioned. As a result, the liquid crystal panel 8 is properly positioned by the positioning ribs 10. As illustrated in FIG. 5, each of the positioning ribs 10 has a body portion 10c with a supporting flange 10b, and a leg portion 10a extending from a bottom surface of the body portion 10c. The leg portions 10a are selectively fitted into one of the inner cavity group and the outer cavity group, respectively. The supporting flanges 10b are disposed on the bottom surfaces 13 of the counterbores 12 of the lamp frames 5 and the cell guides 7, respectively.

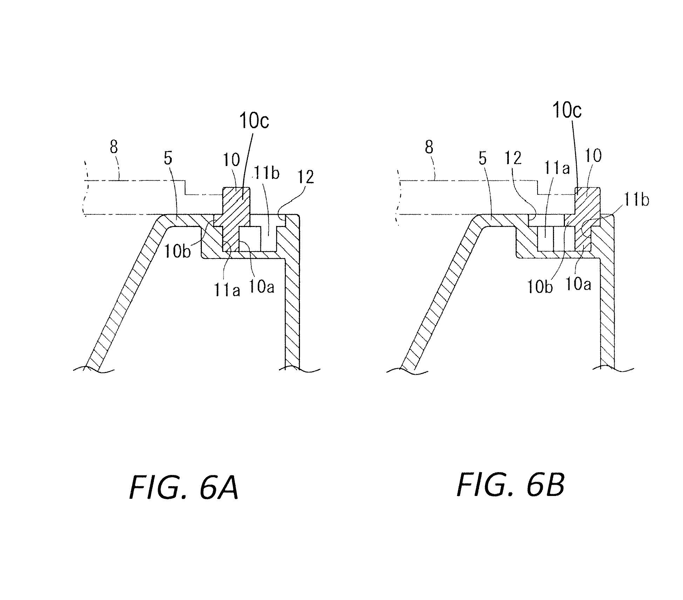

As illustrated in FIGS. 4 and 5, the rectangular counterbores 12 are formed at the longitudinal end portions of the support surfaces 5b of the lamp frames 5. The groove-shaped inner and outer cavities 11a and 11b are formed in the bottom surfaces 13 of the counterbores 12 of the lamp frames 5. Either of two liquid crystal panels 8 of different external dimensions can be positioned so that there is no positional misalignment in the lengthwise direction of the liquid crystal module. As illustrated in FIG. 6A, when a liquid crystal panel 8 having small external dimensions is positioned, the leg portions 10a of the positioning ribs 10 are fitted into the inner cavities 11a of the lamp frames 5, respectively. The lengthwise dimension between the inner cavities 11a of the lamp frames 5 corresponds to the lengthwise dimension (or external shape) of the small liquid crystal panel 8. Furthermore, the supporting flanges 10b of the positioning ribs 10 are fitted into the counterbores 12 of the lamp frames 5, respectively. As illustrated in FIG. 6B, when a liquid crystal panel 8 having large external dimensions is positioned, the leg portions 10a of the positioning ribs 10 are fitted into the outer cavities 11b of the lamp frames 5, respectively. The lengthwise dimension between the outer cavities 11b of the lamp frames 5 corresponds to the lengthwise dimension (or external shape) of the large liquid crystal panel 8. Furthermore, the supporting flanges 10b of the positioning ribs 10 are fitted into the couterbores 12 of the lamp frames 5, respectively.

As described above, each of the rib-assembling portions 7c includes the same structure as the rib-assembling portions 5c. Thus, the positioning ribs 10 are assembled into the rib-assembling portions 7c in the same manner as described above. Either of two liquid crystal panels 8 of different external dimensions can be positioned so that there is no positional misalignment in the widthwise direction of the liquid crystal module. As illustrated in FIG. 3, when the liquid crystal panel 8 having small external dimensions is positioned, the leg portions 10a of the positioning ribs 10 are fitted into the inner cavities 11a of the cell guides 7, respectively. The widthwise dimension between the inner cavities 11a of the cell guides 7 corresponds to the widthwise dimension (or external shape) of the small liquid crystal panel 8. Furthermore, the supporting flanges 10b of the positioning ribs 10 are fitted into the counterbores 12 of the cell guides 7, respectively. Furthermore, when the liquid crystal panel 8 having large external dimensions is positioned, the leg portions 10a of the positioning ribs 10 are fitted into the outer cavities 11b of the cell guide 7, respectively. The widthwise dimension between the outer cavities 11b of the cell guides 7 corresponds to the widthwise dimension (or external shape) of the large liquid crystal panel 8. Furthermore, the supporting flanges 10b of the positioning ribs 10 are fitted into the couterbores 12 of the cell guides 7, respectively.

When the leg portions 10a of the positioning ribs 10 are fitted into one of inner cavity group and outer cavity group and the supporting flanges 10b of the positioning ribs 10 are fitted into the counterbores 12 to assemble the positioning ribs 10, the assembly of the positioning ribs 10 is stable. Thus, it is unlikely that the positioning ribs 10 will come loose. Particularly, the positioning ribs 10 are designed such that that the supporting flanges 10b protrude inward of the liquid crystal module relative to a side surface of the body portion 10c (e.g., toward the liquid crystal panel 8). Furthermore, the lengthwise side portions and widthwise side portions of the liquid crystal panel 8 are placed on the supporting flanges 10b, respectively, as illustrated in FIGS. 3, 4, 6A and 6B. In other words, the supporting flanges 10b of the positioning ribs 10 engage with the lengthwise side portions and widthwise side portions of the liquid crystal panel 8 from below. Thus, the positioning ribs 10 is reliably prevented from coming out of the inner cavity group or the outer cavity group once the positioning ribs 10 are attached to the lamp frames 5 and the cell guides 7.

With the liquid crystal module of this embodiment, each of the rib-assembling portions 5c and 7c has a pair of inner and outer cavities 11a and 11b. However, it is also possible to perform the positioning of three or more types of liquid crystal panels having different external dimensions if three or more of cavities are formed in each of the rib-assembling portions 5c and 7c at locations corresponding to the three or more types of liquid crystal panels having different external dimensions. Furthermore, with the liquid crystal module of this embodiment, a pair of rib-assembling portions 5c is formed on each of the lamp frames 5, and a pair of rib-assembling portions 7c is formed on each of the cell guides 7. However, two or more of the rib-assembling portions 5c can be formed on each of the lamp frames 5, and two or more of the rib-assembling portions 7c can be formed on each of the cell guides 7. Specifically, the rib-assembling portions 5c can be formed in the longitudinal end portions and several intermediate locations of each of the lamp frames 5. Furthermore, the rib-assembling portions 7c can be formed in the longitudinal end portions and several intermediate locations of each of the cell guides 7.

With the liquid crystal module of this embodiment, two or more types of liquid crystal panels 8 having different external dimensions can be positioned by varying the positions where the positioning ribs 10 are assembled on the lamp frames 5 and the cell guides 7. Thus, it is not necessary to design new cell guides or lamp frames having positioning ribs corresponding to the external dimensions of a liquid crystal panel, or to manufacture new molds even when the external dimensions of the liquid crystal panel change. As a result, cost increases can be eliminated.

With the liquid crystal module, the mutually opposing lengthwise side portions of the liquid crystal panel 8 are supported by the cell guides 7 (e.g., lengthwise support members), and the liquid crystal panel 8 is positioned in the widthwise direction by the positioning ribs 10 provided to the cell guides 7. Furthermore, the mutually opposing widthwise side portions of the liquid crystal panel 8 are supported by the lamp frames 5 (e.g., widthwise support members), and the liquid crystal panel 8 is positioned in the lengthwise direction by the positioning ribs 10 provided to the lamp frames 5. The positioning ribs 10 are formed separately from the lamp frames 5 and the cell guides 7. The inner and outer cavities 11a and 11b are formed in the support surfaces 5b of the lamp frames 5 and the support surfaces 7b of the cell guides 7 in at least two locations for each of the positioning ribs 10 to correspond to the external shapes of at least two types of liquid crystal panels 8 having different lengthwise dimensions and widthwise dimensions. The positioning ribs 10 are assembled in the inner cavities 11a or the outer cavities 11b in accordance to the external shape of the liquid crystal panel 8 to be positioned.

Furthermore, the counterbores 12 are formed in the support surfaces 5b and 7b of the lamp frames 5 and the cell guides 7. At least two of the cavities (e.g., inner and outer cavities 11a and 11b) are formed in each of the counterbores 12. The leg portions 10b protruding from the bottom surface of the positioning ribs 10 are fitted into the inner cavities I I a or the outer cavities 11b while the supporting flanges 10b of the positioning ribs 10 are fitted into the counterbores 12.

Moreover, the cell guides 7 are attached to the lengthwise side plate 1c on the lengthwise side edges of the rear frame 1, and the lamp frames 5 are attached to the widthwise side plate 1a on the widthwise side edges of the rear frame 1.

With the liquid crystal module, at least two of the cavities (e.g., inner and outer cavities 11a and 11b) are formed for each of the positioning ribs 10 in the support surfaces 5b and 7b of the lamp frames 5 and the cell guides 7 to correspond to the external shapes of at least two types of liquid crystal panels 8 having different external dimensions (e.g., lengthwise dimensions and widthwise dimensions). Thus, positioning of at least two types of liquid crystal panels 8 having different external dimensions can be performed by assembling the respective positioning ribs 10 in the inner cavities 11a or the outer cavities 11b according to the external shape of the liquid crystal panel 8 to be positioned. Consequently, cell guides and lamp frames on which positioning ribs are integrally formed in accordance with the external dimensions need not be used even when the external dimensions of the liquid crystal panel 8 change. Thus, it is not necessary to design new lamp frames and cell guides and manufacture new molds. Accordingly, cost increases can be eliminated.

With the liquid crystal module, counterbores 12 are formed in the support surfaces 5b of the lamp frames 5 and the support surfaces 7b of the cell guides 7. Furthermore, at least two of the cavities (e.g. inner cavity 11a and outer cavity 11b) are formed in each of the counterbores 12. The leg portions protruding from the bottom surfaces of the positioning ribs 10 are fitted into the inner cavities 11a or the outer cavities 11b while the supporting flanges 10b of the positioning ribs 10 are fitted into the counterbores 12 to assemble the positioning ribs 10. Thus, the assembly of the positioning ribs 10 is stable. Accordingly, no concerns are presented in regard to the positioning ribs 10 falling out during the operation of assembling the liquid crystal module, or in regard to the positioning ribs 10 merely falling out even when subjected to impact after assembly.

Furthermore, with the lamp frames 5 and the cell guides 7, the lengthwise side portions and widthwise side portions of the liquid crystal panel 8 can be reliably supported. Moreover, the rib-assembling portions 5c and 7c can also be readily formed.

### GENERAL INTERPRETATION OF TERMS

In understanding the scope of the present invention, the term "comprising" and its derivatives, as used herein, are intended to be open ended terms that specify the presence of the stated features, elements, components and groups, but do not exclude the presence of other unstated features, elements, components and groups. The foregoing also applies to words having similar meanings such as the terms, "including", "having" and their derivatives. Also, the terms "part," "section," "portion," "member" or "element" when used in the singular can have the dual meaning of a single part or a plurality of parts.

While a preferred embodiment have been chosen to illustrate the present invention, it will be apparent to those skilled in the art from these disclosures that various changes and modifications can be made herein without departing from the scope of the invention as defined in the appended claims. Furthermore, the foregoing descriptions of the preferred embodiment according to the present invention are provided for illustration only, and not for the purpose of limiting the invention as defined by the appended claims and their equivalents.

## Claims

1. A liquid crystal module comprising:
a liquid crystal panel with first and second side portions, the first side portion having an edge extending in a first direction of the liquid crystal module, the second side portion having an edge extending in a second direction of the liquid crystal module that is perpendicular to the first direction of the liquid crystal module;
a first support member supporting the first side portion of the liquid crystal panel, the first support member having a first inner cavity and a first outer cavity, the first outer cavity being outwardly spaced apart from the first inner cavity in the second direction of the liquid crystal module relative to the first inner cavity;
a second support member supporting the second side portion of the liquid crystal panel, the second support member having a second inner cavity and a second outer cavity, the second outer cavity being outwardly spaced apart from the second inner cavity in the first direction of the liquid crystal module relative to the second inner cavity, the first inner cavity of the first support member and the second inner cavity of the second support member forming an inner cavity group of the first and second support members, the first outer cavity of the first support member and the second outer cavity of the second support member forming an outer cavity group of the first and second support members; and
a plurality of positioning ribs detachably and selectively attached to one of the inner cavity group and the outer cavity group such that the positioning ribs positions the liquid crystal panel in the first and second directions of the liquid crystal panel, respectively.

2. The liquid crystal module according to claim 1, wherein
the liquid crystal panel has one of a first predetermined size and a second predetermined size that is larger than the first predetermined size,
the positioning ribs are attached to the inner cavity group of the first and second support members in a case in which the liquid crystal panel has the first predetermined size, and
the positioning ribs are attached to the outer cavity group of the first and second support members in a case in which the liquid crystal panel has the second predetermined size.

3. The liquid crystal module according to claim 1, wherein
the positioning ribs are independently formed as separate members from the first and second support members.

4. The liquid crystal module according to claim 1, wherein
the first support member has a first support surface supporting the first side portion of the liquid crystal panel, the first support member further has a first bottom face that is recessed from the first support surface, with the first inner and outer cavities of the first support member being recessed from the first bottom face of the first support member, and
the second support member has a second support surface supporting the second side portion of the liquid crystal panel, the second support member further has a second bottom face that is recessed from the second support surface, with the second inner and outer cavities of the second support member being recessed from the second bottom face of the second support member.

5. The liquid crystal module according to claim 4, wherein
each of the positioning ribs has a body portion, a supporting flange extending from the body portion, and a leg portion extending from a bottom surface of the body portion, the leg portions of the positioning ribs being selectively fitted into the one of the inner cavity group and the outer cavity group, the supporting flanges of the positioning ribs being disposed on the first and second bottom faces of the first and second support members, respectively.

6. The liquid crystal module according to claim 1, further comprising
a rear frame having a bottom plate with first and second side edges, and first and second side plates extending forward of the rear frame relative to the bottom plate from the first and second side edges, respectively, the first side edge being longer than the second side edge,
a cell guide fixedly attached to the first side plate of the rear frame, the cell guide forming the first support member, and
a lamp frame fixedly attached to the second side plate of the rear frame, the lamp frame forming the second support member.

7. The liquid crystal module according to claim 6, further comprising a light reflecting sheet and a light source disposed within the rear frame, and
an optical sheet disposed above the light source, the optical sheet having a first side edge portion with its edge extending in the first direction of the liquid crystal module, the first side edge portion of the optical sheet being sandwiched between a top surface of the first side plate and the cell guide.

8. The liquid crystal module according to claim 7, wherein
the lamp frame further has a holding groove that extends along a longitudinal direction of the lamp frame, the optical sheet having a second side edge portion with its edge extending in the second direction of the liquid crystal module, the second side edge portion of the optical sheet being disposed within the holding groove of the lamp frame.

9. The liquid crystal module according to claim 2, wherein
the positioning ribs are independently formed as separate members from the first and second support members.

10. The liquid crystal module according to claim 2, wherein
the first support member has a first support surface supporting the first side portion of the liquid crystal panel, the first support member further has a first bottom face that is recessed from the first support surface, with the first inner and outer cavities of the first support member being recessed from the first bottom face of the first support member, and
the second support member has a second support surface supporting the second side portion of the liquid crystal panel, the second support member further has a second bottom face that is recessed from the second support surface, with the second inner and outer cavities of the second support member being recessed from the second bottom face of the second support member.

11. The liquid crystal module according to claim 10, wherein
each of the positioning ribs has a body portion, a supporting flange extending from the body portion, and a leg portion extending from a bottom surface of the body portion, the leg portions of the positioning ribs being selectively fitted into the one of the inner cavity group and the outer cavity group, the supporting flanges of the positioning ribs being disposed on the first and second bottom faces of the first and second support members, respectively.

12. The liquid crystal module according to claim 2, further comprising
a rear frame having a bottom plate with first and second side edges, and first and second side plates extending forward of the rear frame relative to the bottom plate from the first and second side edges, respectively, the first side edge being longer than the second side edge,
a cell guide fixedly attached to the first side plate of the rear frame, the cell guide forming the first support member, and
a lamp frame fixedly attached to the second side plate of the rear frame, the lamp frame forming the second support member.

13. The liquid crystal module according to claim 12, further comprising a light reflecting sheet and a light source disposed within the rear frame, and
an optical sheet disposed above the light source, the optical sheet having a first side edge portion with its edge extending in the first direction of the liquid crystal module, the first side edge portion of the optical sheet being sandwiched between a top surface of the first side plate and the cell guide.

14. The liquid crystal module according to claim 13, wherein
the lamp frame further has a holding groove that extends along a longitudinal direction of the lamp frame, the optical sheet having a second side edge portion with its edge extending in the second direction of the liquid crystal module, the second side edge portion of the optical sheet being disposed within the holding groove of the lamp frame.
